Europäisches Patentamt

European Patent Office

Office européen des brevets

(11) Publication number: **0 109 719**
**B1**

# (12) EUROPEAN PATENT SPECIFICATION

(45) Date of publication of patent specification: **05.11.86**

(51) Int. Cl.⁴: **B 23 B 29/04,** B 23 B 27/04

(21) Application number: **83201645.5**

(22) Date of filing: **17.11.83**

(54) Tool holder with tool.

(30) Priority: **18.11.82 NL 8204473**

(43) Date of publication of application:
**30.05.84 Bulletin 84/22**

(45) Publication of the grant of the patent:
**05.11.86 Bulletin 86/45**

(84) Designated Contracting States:
**AT BE CH DE FR GB IT LI LU NL SE**

(56) References cited:
**EP-A-0 059 602**
**BE-A- 853 475**
**DE-A-2 259 216**
**DE-A-2 305 111**
**DE-A-2 404 302**
**FR-A-2 252 159**
**GB-A-1 274 579**
**US-A-4 332 513**

**The file contains technical information submitted after the application was filed and not included in this specification**

(73) Proprietor: **KOMEETSTAAL HOLDING B.V.**
**Industriestraat 1**
**NL-7005 AN Doetinchem (NL)**

(72) Inventor: **Pondes, Alfonsius Antonius**
**Theodorus**
**de Veentjes 19-1**
**NL-7001 DL Doetinchem (NL)**

(74) Representative: **Klijberg, Josephus B.J. et al**
**Nederlandsch Octrooibureau Johan de Wittlaan**
**15**
**P.O. Box 29720 NL-2502 LS 's-Gravenhage (NL)**

Courier Press, Leamington Spa, England.

## Description

The invention relates to a tool holder with cutting tool comprising a carrier, a lower support for the tool connected to the carrier, an upper clamping member removably connected to the carrier and a tool to be clamped between the lower support and the clamping member, said tool in a cross section perpendicular to its longitudinal axis having a downwardly converging lower face and an upwardly converging upper face cooperating with a downwardly converging groove of the lower support and an upwardly converging groove of the clamping member, said tool having at its rear an abutting face perpendicular to the longitudinal axis of the tool and which lies, when the tool is clamped in the tool, against an abutment face of the clamping member.

A tool holder with cutting tool of this type is known from e.g. DE—A—2 305 111. In said known holder with tool the converging upper and lower faces of the tool and the cooperating grooves of the support and clamping member extend parallel to each other. The abutment is formed by an abutment face of the clamping member.

During operation tool holder and tool are subjected to vibrations. Each time a tool has to be replaced by a new one, the dimensions of the respective tools should be exactly the same which means that the manufacturing of the tools requires high precision. Purpose of the invention is to obtain a tool holder with tool which under all circumstances guarantees proper position of the tool in the tool holder, a position which is not disturbed or changed by vibrations, which tool and tool holder moreover can be manufactured with high precision.

According to the invention this aim is obtained in that the lower and upper converging faces of the tool as well as the cooperating faces of the groove of supporting member and clamping member extend at an angle to each other which opens in a direction away from the cutting edge of the tool with the lower face and cooperating groove of the supporting member extending parallel to the longitudinal axis of the tool holder. The abutment face may alternatively be provided on the lower support.

Due to the fact that the converging upper and lower faces of the tool extend at an angle with respect to each other which opens rearwardly the tool under the clamping force between clamping member and support, is always forced rearwardly. Due to the fact that its rear face forms the abutment the tool always is held and kept in a position in which its rear face lies against the abutment face whilst vibration or forces cannot move it away from it.

Due to the fact that the lower face extends parallel to the longitudinal axis of the tool holder and its abutting rear face extends perpendicular to said lower face accurate manufacturing of the tools is possible with high precision so that upon replacement of a worn tool by a new tool the proper position of the cutting edge is guaranteed.

It is observed that from DE—A—2 2 59 216 a tool holder with tool is known comprising a support and a clamping member as well as a tool held between support and clamping member which tool has converging upper and lower faces cooperating with respect to correspondingly formed grooves of support and clamping member and extending at an angle with respect to each other whereas the rear face of the tool forms the abutment face cooperating with an abutment formed by the support.

In this known tool the converging upper and lower faces extend at an angle with respect to each other which opens towards the cutting edge and which moreover both are at an angle with respect to the longitudinal axis of the tool. This has as result that the clamping force will not move the tool with its rear face against the abutment, but rather away from it whereas manufacturing with high precision is extremely difficult because of the angular position of the converging upper and lower faces with respect to the longitudinal axis and accordingly with respect to the rear face.

With the aid of drawings the invention will now be elucidated in detail.

Fig. 1 shows a side elevation of a tool holder with tool according to the invention.

Fig. 2 is an upper view of Fig. 1 and
Fig. 3 is a front view of Fig. 1.
Fig. 4 is a side view of the tool.
Fig. 5 is a back side and
Fig. 6 is a front side view.
Fig. 7 is a side view of another embodiment of the tool holder with tool according to the invention.
Fig. 8 is an upper view of Fig. 7 and
Fig. 9 is a front view of Fig. 7.
Fig. 10 is a side view of a modified embodiment of the upper clamping means and
Fig. 11 is a front view of Fig. 10.

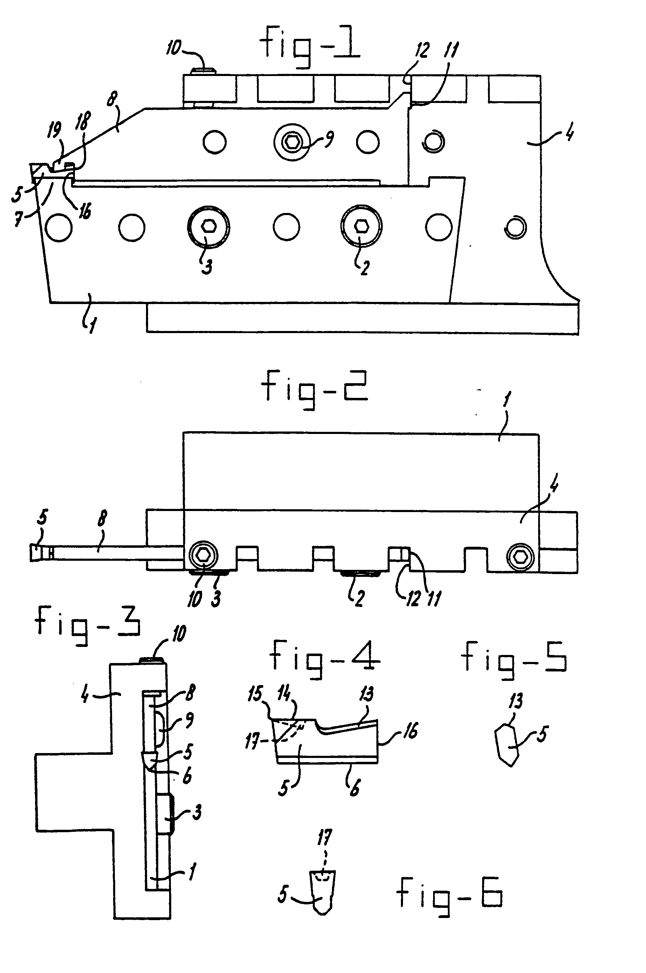

The embodiment shown in the Figs. 1, 2 and 3 comprises a lower support 1, that with bolts 2 and 3 is removably connected to a carrier 4 that in one or another not shown, but known *per se* manner can be mounted in a tool clamp of a machine.

The lower support 1 can be connected in different positions to the support and also can be reversed.

The tool in general is indicated at 5. This tool lies with a V-shaped lower side 6 in a corresponding groove of the upwardly directed nose 7 of the support 1.

The tool is clamped between the support 1 and an upper clamping means 8, which at 9 is connected with a bolt in the carrier 4 and by a pressure screw 10 can be pressed down. This clamping means comprises an abutment face 11 that cooperates with an abutment face 12 of the carrier 4.

The Figs. 4 to 6 inclusive show an embodiment of the tool 5. This has a V-shaped lower side 6, that is parallel to the longitudinal axis of the tool and a V-shaped upper face 13, which behind the cutting face 14 extends upwardly in a direction turned away from the cutting edge 15. Both V-shaped edges end at the spot of the abutment face 16. The chip breaking hollowing out 17 is indicated with dotted lines in Fig. 4 and 6. Fig. 5 shows that with V-shaped sections of the tool that are directed from each other, this still may have a relative large cross section.

The abutment face 16 abuts an abutment face 18 of the upper clamping means 8. The end thereof, indicated at 19, has a V-shaped slot, which in a corresponding way is inclined as the V-shaped upper part 13 of the tool. When clamping the tool 5 its abutment face 16 will be pressed against the abutment face 18, in such a manner that also by the determination of the position of the upper clamping means 8 by the abutment faces 11 and 12 the position of the tool 5 is guaranteed. The position of the cutting edge 15 still only is influenced by tolerances in the length of the tool and this can be kept easily within a region of two hundredths of a millimeter.

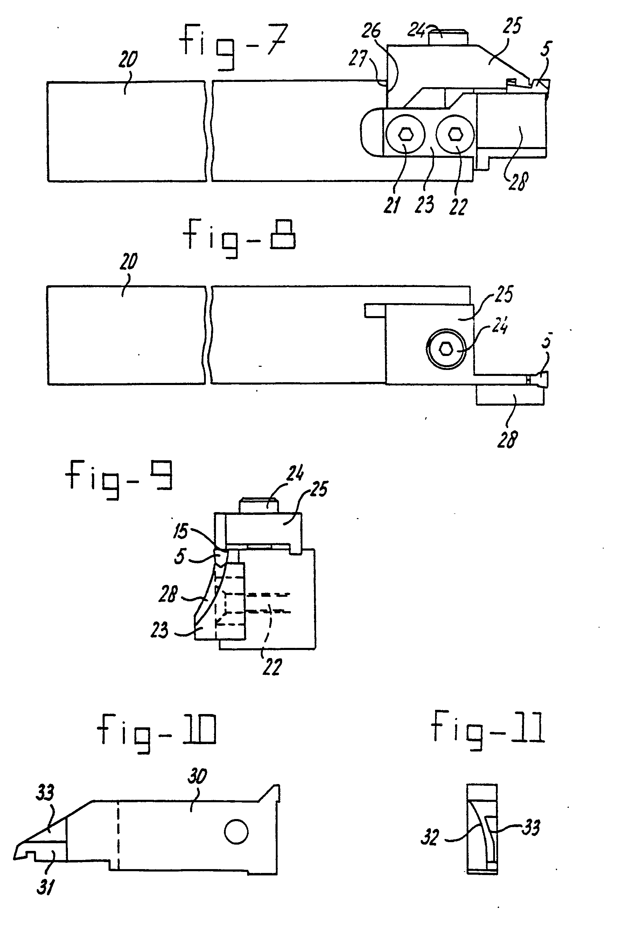

In the figures 7 to 9 inclusive another embodiment is shown in which the carrier 20 comprises a rod with square section in which with bolts 21 and 22 the lower support 23 is mounted and upon which with the aid of the clamping bolt 24 the upper clamping means 25 is connected, which clamping means with its rear end 26 lies against a shoulder 27 of the carrier 20 that serves as abutment face.

Tool 5 is clamped in the same manner as shown in Figs. 1 to 3 inclusive.

This embodiment furthermore differs from the above described shape by the shape of the part of the lower support 23 present below the tool. This part comprises, as appears from Fig. 9, a thin tongue 28 that is bent and that is thinner than the width of the cutting edge 15 of the tool. During slotting the feed direction of the tool is parallel to the axis of the work piece to be machined. By giving the correct curve to the bent part 28 it is possible to cut a slot in the head of a work piece within a determined region, that is determined by the thickness and the radius of the curve.

Situations may occur whereby this also is desirable at the upper side, in which case a clamping means can be taken as shown in Fig. 10 and 11. This clamping means 30 has a shape that is suitable for application in the embodiment of Fig. 1. However, the embodiment shown in Fig. 10 and 11 also can be used in the embodiment according to Figs. 7 to 9 inclusive.

The essence of the embodiment of the upper clamping means according to Figs. 10 and 11 is that the front end of the upper clamping means 30, that is indicated by 31 in the way as shown in Fig. 11, comprises an inwardly turned curve 32 with a bevel 33 at the outer side.

The embodiment shown in Figs. 7 and 9 inclusive shows the longitudinal axis of the tool 5 parallel to the longitudinal axis of the carrier 20. However, it is also possible to position the longitudinal axis of the tool 5 with an angle of for instance 90° with regard to the longitudinal axis of the carrier 20. Therefore only a possibility of mounting is necessary for the lower support against the head of the carrier 20 and a rotation of the upper clamping means about for instance 90° in which case, however, the abutment face of the upper clamps on the carrier preferably remains at the same spot.

## Claim

Tool holder with cutting tool (5) comprising a carrier (4, 20), a lower support (1, 23) for the tool (5) connected to the carrier (4, 20), an upper clamping member (8, 25) removably connected to the carrier (4, 20) and a tool (5) to be clamped between the lower support (1, 23) and the clamping member (8, 25), said tool (5) in a cross section perpendicular to its longitudinal axis having a downwardly converging lower face (6) and an upwardly converging upper face (13) cooperating with a downwardly converging groove of the lower support (1, 23) and an upwardly converging groove of the clamping member (8, 25), said tool (5) having at its rear an abutting face (16) perpendicular to the longitudinal axis of the tool (5) and which lies, when the tool (5) is clamped in the tool holder, against an abutment face (18) of the clamping member (8, 25) or lower support (1, 23), the lower and upper converging faces (6, 13) of the tool (5) as well as the cooperating faces of the groove of supporting member (1, 23) and clamping member (8, 25) respectively extending at an angle to each other which opens in a direction away from the cutting edge (15) of the tool (5) with the lower face (6) and cooperating groove of the supporting member (1, 23) extending parallel to the longitudinal axis of the tool holder.

## Patentanspruch

Werkzeughalter mit Schneidewerkzeug (5), umfassend einen Träger (4, 20), einen unteren Support (1, 23) für das Werkzeug (5), der mit dem Träger (4, 20) verbunden ist, ein oberes Befestigungsteil (8, 25), das entfernbar mit dem Träger (4, 20) verbunden ist und eine Werkzeug (5) zur Befestigung zwischen dem unteren Support (1, 23) und dem Befestigungsteil (8, 25), wobei das Werkzeug (5) in einen Querschnitt senkrecht zu seiner Längsachse eine nach unten Konvergierend untere Fläche (6) und eine nach oben Konvergierend obere Fläche (13) besitzt, die mit einem nach unten laufenden Einschnitt des unteren Supports (1, 23) und einem nach oben laufenden Einschnitt des Befestigungsteils (8, 25) zusammenarbeiten, wobei das Werkzeug (5) auf seiner Rückseite eine anstoßende Fläche (16) senkrecht zu der Längsachse des Werkzeugs (5) besitzt, welche, wenn das Werkzeug (5) in dem Werkzeughalter befestigt ist, gegen eine angrenzende Fläche (18) des Befestigungsteils (8, 25) oder unteren Supports (1, 23) liegt, wobei die untere und obere Konvergierend Fläche (6, 13) des Werkzeugs (5) sowie die zusammenarbeitenden Flächen des Einschnitts des Supportteils (1, 23) bzw. Befestigungsteils (8, 25) sich in einen Winkel zueinander erstrecken, der sich in einer Richtung weg von der Schneidekante (15) des Werkzeugs (5) öffnet, wobei die untere Fläche (6) und der zusammenarbeitende Einschnitt des Supportteils (1, 23) sich parallel zur Längsachse des Werkzeughalters erstrecken.

**Revendication**

Porte-outil et outil de coupe (5) comprenant un élément porteur (4, 20), un support inférieur (1, 23) destiné à l'outil (5) et relié à l'élément porteur (4, 20), un organe de serrage supérieur (8, 25) relié de façon amovible à l'élément porteur (4, 20), et un outil (5) destiné à être serré entre le support inférieur (1, 23) et l'organe de serrage (8, 25), ledit outil (5) comprenant dans une section perpendiculaire à son axe longitudinal une face inférieure (6) convergeant vers le bas et une face supérieure (13) convergeant vers le haut, coopérant avec une gorge convergeant vers le bas du support inférieur (1, 23) et une gorge convergeant vers le haut de l'organe de serrage (8, 25), ledit outil (5) comprenant à l'arrière une surface de butée (16) perpendiculaire à l'axe longitudinal de l'outil (5) qui repose, quand l'outil (5) est serré dans le porte-outil, contre une face de butée (18) de l'organe de serrage (8, 25) ou le support inférieur (1, 23), les faces convergentes supérieure et inférieure (6, 13) de l'outil (5) de même que les faces coopérantes des gorges de l'organe de support (1, 23) et de l'organe de serrage (8, 25) respectivement formant ensemble un angle qui s'ouvre dans une direction s'éloignant de l'arête de coupe (15) de l'outil (5), la face inférieure (6) de ce dernier et la gorge coopérante de l'organe de support (1, 23) s'étendant parallèlement à l'axe longitudinal du porte-outil.

fig-1

fig-2

fig-3

fig-4

fig-5

fig-6

Fig-7

Fig-8

Fig-9

Fig-10

Fig-11